# EUROPÄISCHE PATENTSCHRIFT

(11) **EP 3 848 576 B1**
(45) Veröffentlichungstag und Bekanntmachung des Hinweises auf die Patenterteilung: **29.11.2023**
(21) Anmeldenummer: 20150973.4
(22) Anmeldetag: 09.01.2020
(51) Int. Cl.: F03D 7/02

(54) **VERFAHREN ZUM STEUERN EINES ZUSCHALTVORGANGS EINER WINDENERGIEANLAGE SOWIE EINE SOLCHE WINDENERGIEANLAGE**
METHOD FOR CONTROLLING A SUPPLY CIRCUIT OF A WIND POWER PLANT AND SUCH A WIND POWER PLANT
PROCÉDÉ DE COMMANDE D'UN PROCESSUS DE MISE EN CIRCUIT D'UNE ÉOLIENNE AINSI QU'UNE TELLE ÉOLIENNE

(43) Veröffentlichungstag der Anmeldung: 14.07.2021
(73) Patentinhaber: Nordex Energy SE & Co. KG, 22419 Hamburg (DE)
(72) Erfinder: Knopp, Hauke, 20259 Hamburg (DE); Fischle, Kurt, 20253 Hamburg (DE)
(74) Vertreter: Hauck Patentanwaltspartnerschaft mbB

(56) Entgegenhaltungen:
- DE-A1-102016 015 133
- US-A1- 2011 140 423

## Beschreibung

Die Erfindung betrifft ein Verfahren zum Steuern eines Zuschaltvorgangs einer Windenergieanlage sowie eine solche Windenergieanlage.

Unterhalb einer Startwindgeschwindigkeit speisen Windenergieanlagen keine Leistung in das elektrische Netz ein. Der Rotor der Windenergieanlage erreicht keine ausreichende Drehzahl, um die Anlage als Generator am Netz zu betreiben. Liegt an der Windenergieanlage eine ausreichend große Windgeschwindigkeit vor, kann die Windenergieanlage in ihren Produktionsbetrieb überführt werden. Dies setzt voraus, dass an der Windenergieanlage kein Fehler vorliegt, der ein Zuschalten verhindert. In der Regel teilt die Windenergieanlage einer übergeordneten Steuereinheit mit, ob diese in den Produktionsbetrieb überführt werden kann. Ist die Windgeschwindigkeit kleiner als die vorbestimmte Startwindgeschwindigkeit, so wird kein Zuschaltvorgang eingeleitet, sondern die Anlage wartet weiter auf ausreichend Wind. Liegt eine Windgeschwindigkeit oberhalb der Startwindgeschwindigkeit vor, kann die Anlage, wenn kein Fehler vorliegt, von der übergeordneten Steuereinheit eine Startfreigabe erhalten. Wurde die Startfreigabe erteilt, verfährt die Windenergieanlage den Einstellwinkel ihrer Rotorblätter, so dass der Rotor kinetische Energie aus dem den Rotor anströmenden Wind aufnehmen kann und die Drehzahl des Rotors sich beschleunigt. Ist eine Zuschaltdrehzahl erreicht, kann die Windenergieanlage mit dem Netz synchronisiert werden. Abhängig von der vorliegenden Windgeschwindigkeit kann die Windenergieanlage anschließend in einen Teillast- oder Volllastbetrieb überführt werden. Damit dem Hauptumrichter die Netzkopplung ermöglicht wird, ist es notwendig, dass der Rotor der Windenergieanlage bzw. der Rotor des Generators der Windenergieanlage während des Zuschaltvorgangs die Zuschaltdrehzahl erreicht. Die Beschleunigung des Rotors während des Zuschaltvorgangs kann über die Änderung des Rotorblatteinstellwinkels erreicht werden, der beispielsweise aus einer Stellung im Trudelbetrieb bei einem Winkel von 70° in Richtung 0° verfahren wird, sodass ein erhöhtes Drehmoment aus dem Wind aufgenommen wird. Der Generator wird lastfrei, das heißt ohne Generatorgegenmoment, auf eine Zuschaltdrehzahl beschleunigt. Die Startwindgeschwindigkeit wird üblicherweise in Bezug auf einen gleitenden Mittelwert der Windgeschwindigkeit bezogen, der beispielweise über ein gleitendes Zeitintervall von 30 Sekunden, 1 Minute oder mehreren Minuten bestimmt wird. Die Messung der Windgeschwindigkeit kann beispielsweise über ein Flügelschalenanemometer erfolgen. Wird während des Zuschaltvorgangs die für die Netzkopplung benötigte Zuschaltdrehzahl nicht erreicht, so wird der Zuschaltversuch gemäß dem Stand der Technik nach einer fix parametrierten Maximaldauer von beispielsweise 600 Sekunden beendet und die Anlage wechselt wieder in einen Zustand, in welchem sie auf ein erneutes Zuschaltsignal bzw. das Erreichen der benötigten Windbedingungen für einen Start der Anlage wartet.

Für einen erfolglosen Zuschaltversuch der Windenergieanlage kann es eine Vielzahl von verschiedenen Gründen geben. Beispielsweise kann der Wind währenddessen nachlassen. Auch kann die Aerodynamik der Rotorblätter, beispielsweise durch Eisansatz stark verschlechtert sein, sodass der Rotor der Windenergieanlage nicht ausreichend Drehmoment aufnehmen kann und die zur Netzkopplung benötigte Generatordrehzahl nicht erreicht wird.

In der Regel ist die Betriebsführung so ausgelegt, dass auch nach einem abgebrochenen Zuschaltversuch ein erneuter Zuschaltversuch unternommen wird, wenn erneut eine (mittlere) Windgeschwindigkeit oberhalb der Startgeschwindigkeit ermittelt wird. Werden keine zusätzlichen Vorkehrungen getroffen, kann es geschehen, dass die Windenergieanlage eine Vielzahl von Startversuchen in einer kurzen Zeit unternimmt bis eine erfolgreiche Zuschaltung erfolgt ist. Das Getriebelager, speziell das generatorseitige Lager, ist in der Regel nicht für den lastfreien Betrieb der Windenergieanlage ausgelegt. Wird das Getriebe im lastfreien Zustand mit hoher Drehzahl betrieben, kann dies zu einem Rutschen der Wälzkörper über die Laufflächen der Lagerringe des Lagers führen. Dabei kann die Schmierung abreißen und es resultieren Schäden an den Wälzkörpern und Laufflächen. Diese Schäden können bereits nach wenigen Minuten in einem solchen Betriebszustand durch Rutschen der Wälzkörper auftreten. Um eine vorzeitige Abnutzung des Lagers durch solche instabilen Betriebszustände zu verhindern, bedarf es einer verbesserten Steuerung des Zuschaltverhaltens der Windenergieanlage.

Aus US 2011/0140423 A1 ist ein Verfahren zum Betrieb einer Windenergieanlage bekannt, bei dem für ein Zuschalten der Windenergieanlage an das Netz zunächst die Drehzahl des Rotors erhöht wird, sowie überprüft wird, ob die Windenergieanlage eine geforderte Mindestenergie in das Netz einspeisen könnte und die Windenergieanlage dann zuschaltet, wenn mehr als die geforderte Mindestenergie in das Netz eingespeist werden kann. Für diesen Anlaufzustand ist eine vorbestimmte maximale Zeit vorgegeben, bei deren Überschreiten die Windenergieanlage den Zuschaltversuch beendet und wieder in einen Spinning-Betrieb zurückkehrt.

Der Erfindung liegt daher die Aufgabe zugrunde, ein Verfahren zur Steuerung des Zuschaltverhaltens einer Windenergieanlage und eine Windenergieanlage mit einem gesteuerten Zuschaltverhalten bereitzustellen, bei denen mit einfachen Mitteln zu lange dauernde Zuschaltvorgänge sowie eine zu häufige Abfolge von erfolglosen Zuschaltvorgängen vermieden werden.

Erfindungsgemäß wird die Aufgabe durch ein Verfahren mit den Merkmalen des Anspruchs 1 gelöst. Vorteilhafte Ausgestaltungen bilden den Gegenstand der Unteransprüche.

Das erfindungsgemäße Verfahren ist vorgesehen und bestimmt zum Steuern eines Zuschaltvorgangs einer Windenergieanlage. Bei dem Zuschaltvorgang wird ansprechend auf ein Zuschaltsignal eine Drehzahl des Generators erhöht mit dem Ziel eine für eine Netzkopplung benötigte Zuschaltdrehzahl zu erreichen und eine Netzkopplung vorzunehmen. In dem erfindungsgemäßen Verfahren ist eine zulässige Zuschaltzeitdauer vorgegeben, innerhalb derer nach Auftreten des Zuschaltsignals die Netzkopplung erreicht sein muss. Wird die Netzkopplung nicht innerhalb der vorgegeben zulässigen Zuschaltzeitdauer erreicht, so wird der durch das Zuschaltsignal ausgelöste Zuschaltvorgang abgebrochen. Die Anlage kehrt dann wieder in einen Zustand zurück, in welchem sie auf ein erneutes Zuschaltsignal wartet. Erfindungsgemäß wird die Länge der zulässigen Zuschaltzeitdauer abhängig von der Windgeschwindigkeit vorgegeben. Bei dem erfindungsgemäßen Verfahren wird also nicht wie bei einer herkömmlichen Windenergieanlage mit einer konstant vorgegebenen Zuschaltzeitdauer gearbeitet, sondern die Zuschaltzeitdauer richtet sich nach der Windgeschwindigkeit, bei welcher der Zuschaltvorgang eingeleitet wird. Der Erfindung liegt die Erkenntnis zugrunde, dass die durchschnittliche Zeitdauer für das Zuschalten von Windenergieanlagen, in dem Fall, dass kein Fehler vorliegt, stark von der Windgeschwindigkeit abhängt. Weiterhin kann, wenn bekannt ist, innerhalb welcher durchschnittlichen Zeitdauer eine intakte Windenergieanlage bei einer bestimmten Windgeschwindigkeit typischerweise zuschaltet, der Zuschaltvorgang bereits früher abgebrochen werden, wenn innerhalb der durchschnittlichen Zeitdauer das Zuschalten nicht gelungen ist. Im Ergebnis stellt die von der Windgeschwindigkeit abhängige Zuschaltzeitdauer sicher, dass nicht unnötig lange der Zuschaltvorgang ausgeführt wird, obwohl das Zuschalten längst hätte erfolgen müssen. Hierdurch wird die Zeit in der die Lager lastfrei arbeiten reduziert und Beschädigungen der Windenergieanlage werden vermieden. In einer bevorzugten Weiterführung des erfindungsgemäßen Verfahrens ist die Zuschaltzeitdauer so ausgelegt, dass diese bei geringerer Windgeschwindigkeit länger dauert als bei stärkerer Windgeschwindigkeit. Dies bedeutet bei geringeren Windgeschwindigkeiten, beispielsweise in der Nähe der Startwindgeschwindigkeit wird länger gewartet, bis ein erfolgloser Zuschaltvorgang abgebrochen wird als bei einer starken Windgeschwindigkeit, bei der die Zuschaltdrehzahl schnell erreicht werden kann.

Erfindungsgemäβ ist ein Time-Out-Zähler vorgesehen, der eingerichtet ist, seinen Zählerwert um einen Inkrementwert zu erhöhen, wenn der Zuschaltvorgang abgebrochen wurde. Der Time-Out-Zähler gibt einen Überblick darüber, wie häufig bereits Zuschaltvorgänge abgebrochen wurden. Erfindungsgemäβ wird dabei ein Inkrementwert gewählt, der von der Windgeschwindigkeit abhängt. Dies bedeutet, dass der Time-Out-Zähler seinen Zählerwert anders erhöht, wenn bei großer Windgeschwindigkeit der Zuschaltvorgang abgebrochen wird als wenn dieser bei niedriger Windgeschwindigkeit abbricht. Bevorzugt ist der Inkrementwert bei niedriger Windgeschwindigkeit kleiner als bei großer Windgeschwindigkeit. Auch hier beruht der windabhängige Inkrementwert auf dem Gedanken, dass bei großer Windgeschwindigkeit eine fehlerfrei arbeitende Anlage den Zuschaltvorgang nicht abbrechen sollte. Der Time-Out-Zähler wird daher mit höheren Windgeschwindigkeiten stärker erhöht. Bei einer niedrigen Windgeschwindigkeit, die beispielsweise nahe einer Zuschaltwindgeschwindigkeit liegt, wird der Inkrementwert dann weniger erhöht, da der abgebrochene Zuschaltvorgang ein geringeres Aussagegewicht besitzt.

In einer Weiterführung des erfindungsgemäßen Verfahrens ist für den Time-Out-Zähler vorgesehen, beim Überschreiten eines Schwellwerts ein Warnsignal abzusetzen. Bevorzugt ist der Schwellwert für alle Windgeschwindigkeiten gleich. Bei Überschreiten des Schwellwerts wird die Windenergieanlage ausgeschaltet und kann erst wieder in Betrieb genommen werden, wenn der Fehler durch einen Operator quittiert und die Windenergieanlage für den weiteren Betrieb freigegeben wurde. Die Freigabe kann bevorzugt durch einen Mitarbeiter der Fernüberwachung, aber auch vor Ort durch einen Servicetechniker erfolgen. Dies stellt sicher, dass vor einer Fortsetzung des Betriebes mögliche Fehlerursachen kritisch überprüft werden. Neben der Inkrementierung des Zählerwerts kann auch eine Dekrementierung, also ein Herabsetzen des Zählerwertes vorgesehen sein. Hierzu ist in einer bevorzugten Ausgestaltung eine Dekrementierungsrate vorgesehen, die eine Dekrementierung des Zählerwerts mit der Zeit angibt. Bevorzugt erfolgt eine lineare Dekrementierung mit der Zeit.

In einer Weiterführung des erfindungsgemäßen Verfahrens ist die zulässige windgeschwindigkeitsabhängige Zuschaltzeitdauer basierend auf einer statistischen Auswertung des Startverhaltens einer Vielzahl von Windenergieanlagen der gleichen Bauform vorgegeben. Die Zeitdauer zwischen erfolgter Startfreigabe und einer erfolgreichen Zuschaltung wird für eine hinreichend große Anzahl von Windenergieanlagen der gleichen Bauform für verschiedene Windgeschwindigkeiten ermittelt und bei der Festlegung der zulässigen windgeschwindigkeitsabhängige Zuschaltzeitdauer für Windenergieanlagen dieser Bauform berücksichtigt. Für die Festlegung der windgeschwindigkeitsabhängige Zuschaltzeitdauer kann die mittlere Zeitdauer für eine erfolgreiche Zuschaltdauer berücksichtigt werden.

Alternativ oder ergänzend dazu kann die Zeitdauer berücksichtigt werden, nach welcher 95% oder mehr der unternommenen Zuschaltversuche mit einer erfolgreichen Netzaufschaltung abgeschlossen worden sind. Besonders bevorzugt werden für Windgeschwindigkeitsintervalle von 0,5 m/s Werte für die zulässige Zuschaltzeitdauer so vorgegeben, dass basierend auf der statistischen Auswertung innerhalb dieser Zeitdauer in dem jeweiligen Windgeschwindigkeitsintervall eine erfolgreiche Zuschaltung von 98% oder höher erwartet werden kann. Alternativ kann die zulässige Zuschaltzeitdauer abhängig von der Windgeschwindigkeit mittels geeignet gewählter Stützstellen empirisch vorgegeben werden. Die Stützstellen können dabei so gewählt sein, dass die von den Stützstellen gestützte Kurve eine hinreichend große Anzahl an Messpunkten für die gemessene Zuschaltdauer unter sich einschließt. Bei der statistischen Auswertung ist zu berücksichtigen, dass in dieser ausschließlich Windenergieanlagen berücksichtigt werden, für die während des Startversuchs kein Fehler zu einem Abbruch geführt hat. Für die statistische Auswertung ist bevorzugt eine Anzahl von mehreren 10 bis mehreren 100 Windenergieanlagen geeignet. Bei der statistischen Auswertung und Festlegung der Werte für die zulässige Zuschaltzeitdauer kann zudem auch eine Berücksichtigung von Standortbedingungen erfolgen. Messdaten für Windenergieanlagen der gleichen Baureihe aus unterschiedlichen Windparks können selektiv nach geeigneten Standortkriterien statistisch ausgewertet werden.

Erfindungsgemäß wird die Aufgabe auch durch eine Windenergieanlage mit einer Betriebsführung gelöst, die ansprechend auf ein Zuschaltsignal einen Zuschaltvorgang beginnt. Die Betriebsführung der erfindungsgemäßen Windenergieanlage erfasst eine Zeitdauer ab dem Zuschaltsignal und vergleicht diese mit einer von der Windgeschwindigkeit abhängigen zulässigen Zuschaltzeitdauer. Bei Überschreiten der Zuschaltzeitdauer wird der Zuschaltvorgang abgebrochen. Bei der erfindungsgemäßen Windenergieanlage ist die Zuschaltzeitdauer, innerhalb der nach einem Zuschaltsignal die Netzkopplung versucht wird, abhängig von der Windgeschwindigkeit, um den Zuschaltvorgang nicht zu lange auszudehnen.

In einer bevorzugten Weiterbildung ist die Zuschaltzeitdauer bei niedriger Windgeschwindigkeit länger als bei stärkerer Windgeschwindigkeit. Der Vergleich zwischen niedriger und stärkerer Windgeschwindigkeit bezieht sich auf einzelne Werte der Windgeschwindigkeit und ist nicht im Sinne eines streng monotonen Verhaltens zu verstehen.

Erfindungsgemäβ ist die Betriebsführung mit einem Time-Out-Zähler ausgestattet, dessen Zählerwert um einen Inkrementwert inkrementiert wird, wenn der Zuschaltvorgang abgebrochen wurde. Der Zählerwert des Time-Out-Zählers gibt an, in welchem Maße und in welcher Stärke das Zuschalten der Windenergieanlage beeinträchtigt ist. Bevorzugt wird hierbei auch der Inkrementwert abhängig von der Windgeschwindigkeit festgesetzt, sodass hier gewichtet werden kann, ob ein Zuschaltvorgang bei starker oder bei schwacher Windgeschwindigkeit abgebrochen wird.

Um einen Überblick über das Verhalten der Windgeschwindigkeit zu haben, kann ein Schwellwert definiert sein, mit dem der Zählerwert des Time-Out-Zählers verglichen wird. Bei Überschreiten des - bevorzugt nicht von der Windgeschwindigkeit abhängigen - Schwellwerts, kann ein Warnsignal abgesetzt werden. Das Warnsignal stellt sicher, dass das Betriebsverhalten der Windenergieanlage überprüft wird.

Um lange zurückliegende Fehlversuche beim Zuschalten weniger stark zu gewichten, kann eine Dekrementierungsrate vorgesehen sein, die eine Dekrementierung des Zählerwerts mit der Zeit definiert. Bevorzugt wird der Zählerwert linear mit der Zeit um die Dekrementierungsrate vermindert. Die Dekrementierung des Zählerwerts führt dazu, dass kurz nach einander erfolgte Zuschaltversuche bei einem Abbrechen der Zuschaltversuche stärker gewichtet werden, als zeitlich weit auseinander liegende Zuschaltversuche.

Eine bevorzugte Ausgestaltung der Erfindung wird nachfolgend anhand von Ausführungsbeispielen näher erläutert. Es zeigen:
- Fig. 1: eine Windenergieanlage in seitlicher Ansicht,
- Fig. 2: ein schematisches Diagramm eines Windparks mit einer übergeordneten Steuereinheit, wobei die Windenergieanlage aus Fig. 1 Teil des Windparks ist,
- Fig. 3: einen beispielhaften Verlauf für die zulässige Zuschaltzeitdauer abhängig von der Windgeschwindigkeit,
- Fig. 4: einen beispielhaften Verlauf für einen Inkrementwert abhängig von der Windgeschwindigkeit,
- Fig. 5a: einen beispielhaften Verlauf eines Zählerwerts über der Zeit bis zum Erreichen eines Schwellwerts,
- Fig. 5b: den zeitlichen Verlauf eines Fehlerwerts bei schwacher Windgeschwindigkeit und einem definierten Dekrement des Zählerwerts,
- Fig. 5c: den zeitlichen Verlauf des Zählerwerts bei definiertem Dekrement und starker Windgeschwindigkeit,
- Fig. 5d: den Verlauf des Zählerwerts bei schwacher Windgeschwindigkeit und zeitlich weit voneinander beabstandeten Fehlversuchen, und
- Fig. 6: eine beispielhafte statistische Verteilung für die gemessene Zeitdauer für eine erfolgreiche Zuschaltung über der Windgeschwindigkeit für eine Vielzahl von Windenergieanlagen der gleichen Bauform eines Windparks.

Soweit nichts anderes angegeben ist, bezeichnen im Folgenden gleiche Bezugszeichen gleiche Gegenstände.

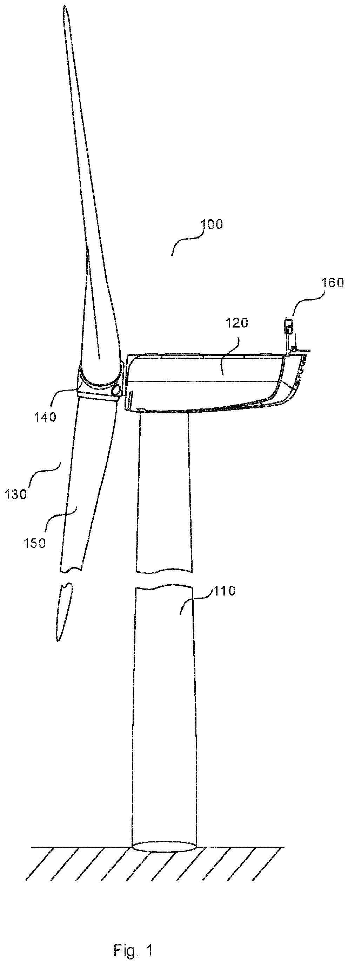

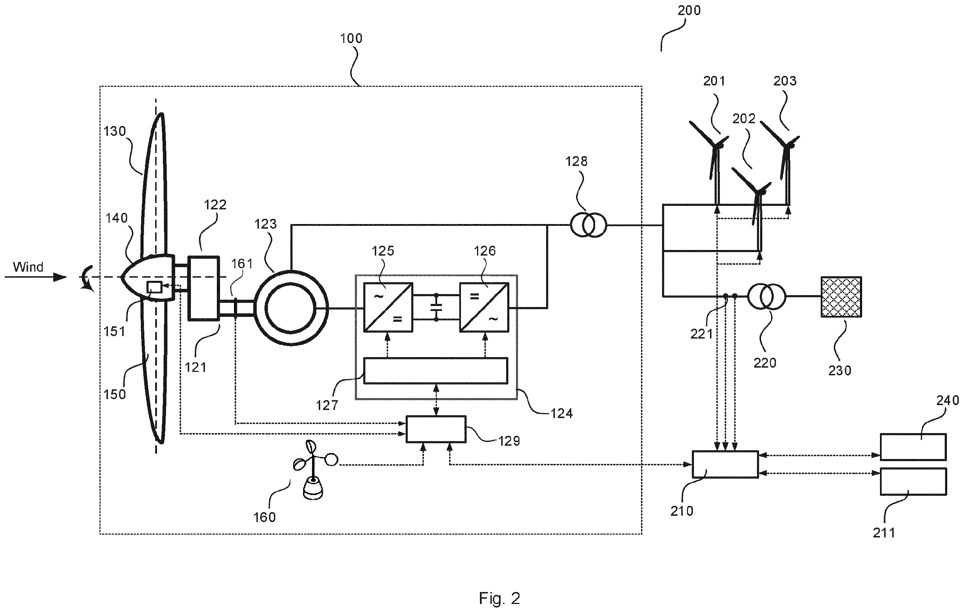

In Figur 1 ist eine Windenergieanlage 100 ersichtlich, umfassend einen Turm 110, eine drehbar am oberen Ende des Turmes 110 angeordnete Gondel 120, einen drehbar an der Gondel 120 angeordneten Rotor 130 mit einer Rotornabe 140 und sich von der Rotornabe 140 fort erstreckenden Rotorblättern 150. Auf der Gondel ist zudem ein Sensorarray 160 dargestellt, das mit Sensoren zur Messung der Windgeschwindigkeit und der Windrichtung versehen ist. Die Windenergieanlage 100 ist geeignet für das erfindungsgemäße Verfahren und ist Teil eines Windparks 200, wie in Fig. 2 dargestellt.

Figur 2 zeigt insgesamt einen Windpark 200, wobei der elektrische Aufbau der Windenergieanlage 100 besonders herausgestellt ist. Zudem sind weitere Windenergieanlagen 201, 202, 203 ersichtlich, welche allesamt Teil des Windparks 200 sind. Die Windenergieanlagen des Windparks 200 sind über eine Übergabestation 220 mit einem dreiphasigen elektrischen Übertragungsnetz 230 verbunden und können in dieses Leistung einspeisen. Die Windenergieanlagen sind jeweils über einen Mittelspannungstransformator 128, der in Fig. 2 exemplarisch für die Windenergieanlage 100 dargestellt ist, mit der Übergabestation 220 und dem elektrischen Übertragungsnetz 230 verbunden.

Der Rotor 130 der Windenergieanlage 100 nimmt ein Drehmoment aus dem Wind auf und leitet dieses über einen Antriebsstrang 121, der ein Getriebe 122 umfasst, an den Rotor eines doppeltgespeisten Asynchrongenerators 123 weiter, welcher eingerichtet ist, die aus dem Wind aufgenommene kinetische Energie in elektrische Energie umzuwandeln und in das elektrische Übertragungsnetz 230 einzuspeisen. Der Stator des Generators 123 ist über eine dreiphasige Leitung mit dem elektrischen Versorgungsnetz 230 verbunden. Der Rotor des Generators 123 ist über eine dreiphasige Leitung mit einem Wechselstrom-Umrichter 124 verbunden. Der Wechselstrom-Umrichter 124 ist netzseitig über eine dreiphasige Leitung mit dem Stator des Generators 123 und dem elektrischen Versorgungsnetz 230 verbunden. Zur besseren Übersicht werden elektrische Leitungen in der Fig. 2 schematisch einphasig dargestellt.

Der Wechselstrom-Umrichter 124 weist einen rotorseitigen Umrichter 125 und einen netzseitigen Umrichter 126 auf. Zwischen den Umrichtern ist ein Gleichstromzwischenkreis vorgesehen. Ein Umrichterregler 127 des Wechselstrom-Umrichters 124 ist dazu eingerichtet, über eine Regelung der Rotorströme in dem Rotor des Generators 123 ein Generatormoment und damit die über den Statorkreis eingespeiste Leistung einzustellen. Der Umrichterregler 127 des Wechselstrom-Umrichters 124 ist weiterhin dazu eingerichtet, die über den netzseitigen Umrichter 126 eingespeiste Leistung einzustellen. Hierzu kann der Umrichterregler 127 dem rotorseitigen und/oder dem netzseitigen Umrichter 125, 126 Stellgrößen für Ströme, Spannungen, Leistungen und/oder das Generatormoment vorgeben. Für die Ströme und Leistungen können Blind- und/oder Wirkgrößen vorgegeben werden. Entsprechende Regelungsverfahren sind allgemein für doppelt-gespeiste Asynchronmaschinen bekannt. Der rotorseitige Umrichter 125 stellt die Rotorströme und damit das Generatormoment durch die Schaltung von leistungselektronischen Bauelementen ein. Zur Regelung des Generatormoments kommuniziert der Umrichterregler 127 mit einem Windenergieanlagenregler 129 und erhält von diesem insbesondere einen Sollwert für ein Generatormoment oder eine abzugebende Wirkleistung.

Die Windenergieanlage 100 weist einen Drehzahlsensor 161 auf. Dieser kann an einer Stelle an dem Antriebsstrang 121 vorgesehen sein, der eine Messung der Drehzahl des Antriebstrangs zulässt, beispielsweise an einer Getriebeausgangswelle, die mit dem Rotor des Generators 123 verbunden ist. Von dem Drehzahlsensor 161 gemessene Drehzahlwerte liegen als Eingangsgröße an dem Windenergieanlagenregler 129 an. Weiterhin liegen an dem Windenergieanlagenregler 129 Größen an, die mittels der Sensoren des Sensorarrays 160 erfasst werden. Beispielsweise liegen die Windgeschwindigkeit und die Windrichtung als Eingangsgrößen an dem Windenergieanlagenregler 129 an. Die Gondel 120 der Windenergieanlage und damit ihr Rotor 130 kann über eine Azimutverfahreinrichtung (nicht gezeigt) gegenüber der Windrichtung ausgerichtet werden.

Der Windenergieanlagenregler 129 ist weiterhin mit einer Rotorblattwinkelstellvorrichtung 151 verbunden, mittels derer der Windenergieanlagenregler 129 die Pitchwinkel der Rotorblätter 150 steuert. Der Windenergieanlagenregler 129 dient generell dazu, die Windenergieanlage 100 in ihrem Betrieb zu regeln. Der Windenergieanlagenregler 129 kann beispielsweise als speicherprogrammierbare Steuerung (SPS) ausgebildet sein und eine Software zur Regelung der Windenergieanlage aufweisen. In dem vorliegenden Ausführungsbeispiel ist der Windenergieanlagenregler 129 dazu eingerichtet, das erfindungsgemäße Verfahren auszuführen. Beispielsweise empfängt der Windenergieanlagenregler 129 Signale und Steuerbefehle von einem Windparkregler 210, mit welchem er über eine Datenleitung kommuniziert. Der Windparkregler 210 ist eingerichtet Signale für die Regelung des Windparks 200 an die einzelnen Windenergieanlagen 100, 201, 202, 203 bzw. deren Windenergieanlagenregler bereitzustellen. Neben Sollwertvorgaben umfassen diese Signale auch eine Produktionserlaubnis bzw. eine Startfreigabe. Die Windenergieanlagenregler der einzelnen Windenergieanlagen sind eingerichtet, Messsignale und Statusinformationen an den Windparkregler 210 zu übermitteln. Beispielsweise können die Windenergieanlagenregler eingerichtet sein, dem Windparkregler die Startbereitschaft und ihre verfügbare Wirkleistung mitteilen. Der Windparkregler 210 kann beispielsweise als speicherprogrammierbare Steuerung (SPS) ausgebildet sein und eine Software zur Regelung des Windparks aufweisen. Der Windparkregler 210 ist über eine Datenleitung mit einer externen Regelungseinrichtung 211, beispielsweise einer Netzleitstelle, verbunden und kann von dieser Sollwertvorgaben für die von dem Windpark einzuspeisende Leistung erhalten. Der Windparkregler 210 ist eingerichtet, die Wirkleistungsabgabe des Windparks in Abhängigkeit von Sollwertvorgaben der von der externen Regelungseinrichtung 211 einzustellen. Diese Sollwertvorgaben können beispielsweise auf Basis einer von dem Windparkregler 210 an die externe Regelungseinrichtung 211 gemeldeten verfügbaren Wirkleistung des Windparks und dem Leistungsbedarf des Energieversorgungsnetzes vorgegeben sein. Alternativ oder ergänzend dazu kann die Wirkleistungssollwertvorgabe für den Windpark durch den Windparkregler 210 auf Basis von Messwerten erfolgen, die mittels einer Sensoreinheit 221 am oder in der Nähe des Netzverknüpfungspunktes des Windparks erfasst werden und die als Eingangsgrößen an dem Windparkregler 210 anliegen. Beispielsweise kann die Wirkleistungssollwertvorgabe basierend auf einer gemessenen Netzfrequenz, der Netzspannung und/oder der eingespeisten Blindleistung vorgegeben werden. Entsprechende Verfahren sind aus dem Stand der Technik bekannt. Der Windpark 200 ist (hier dargestellt über die Verbindung mit dem Windparkregler 210) mit einer Fernwartung 240 kommunikativ verbunden, die eingerichtet ist, Statusmitteilungen des Windparks und der Anlagen des Windparks zu empfangen. Über die Fernwartung können auch Steuerbefehle an den Windpark bzw. die Windenergieanlagen übermittelt werden.

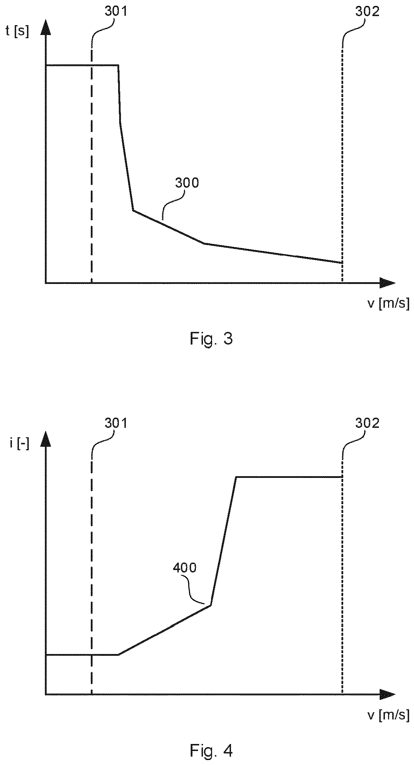

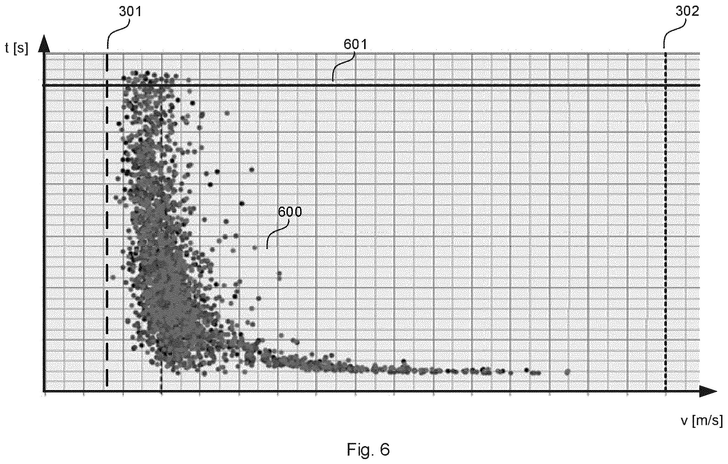

Figur 3 zeigt die zulässige Zuschaltzeitdauer abhängig von der Windgeschwindigkeit. Bei einer geringen Windgeschwindigkeit im Bereich der Startwindgeschwindigkeit von 3 m/s ist ein großer Wert, beispielsweise 600 Sekunden, für die Zuschaltzeitdauer vorgesehen. Dieser bleibt zunächst konstant und fällt danach in einzelnen linearen Abschnitten ab. Der geringsten Wert von 75 Sekunden Zuschaltzeitdauer ist bei der Abschaltgeschwindigkeit für die Windenergieanlage von 25 ms/ vorgegeben. Die einzelnen linearen Abschnitte sind durch Stützstellen definiert, die in dem Windenergieanlagenregler 129 gespeichert sind. Die zulässige Zuschaltzeitdauer aus Fig. 3 definiert, abhängig von der Windgeschwindigkeit, wie lang der Windenergieanlagenregler 129 einen Zuschaltvorgang ausführt, bevor ein nicht mit einer Zuschaltung beendeter, erfolgloser Zuschaltversuch abgebrochen wird. Da die Windenergieanlage, wenn bei stärkerem Wind ein Zuschaltversuch unternommen wird, und wenn an der Anlage kein Fehler oder Vereisung vorliegen, deutlich schneller ihre Zuschaltdrehzahl erreichen sollte, als bei geringen Windstärken, ist die zulässige Zuschaltzeitdauer bei hohen Windgeschwindigkeiten geringer gewählt. Benötigt die Windenergieanlage jedoch auch bei starkem Wind bedeutend länger für das Erreichen der Zuschaltdrehzahl des Generators, so liegt ein Anlagenerhalten vor, welches ggf. auf einen Fehler oder einen Vereisungszustand hinweist. Der Zuschaltversuch wird durch den Windenergieanlagenregler 129 abgebrochen. Durch die Abhängigkeit von der Windgeschwindigkeit der Zuschaltzeitdauer kann das Zuschaltverhalten plausibilisiert werden und ein nicht plausibles Zuschaltverhalten oder eine Vereisung von der Betriebsführung erkannt werden. Die Auswahl der Stützstellen und der konkrete Verlauf der zulässigen Zuschaltzeitdauer über der Windgeschwindigkeit geht auf eine statistische Auswertung der Zuschaltdauer zurück (vgl. Fig. 6). In diesem Ausführungsbeispiel wurden die Stützstellen für den Windenergieanlagenregler empirisch anhand der in der Fig. 6 dargestellten Verteilung so parametriert, dass die gemessenen Zeiten für eine erfolgreiche Zuschaltung im Wesentlichen durch den Verlauf der vorgegebenen zulässigen Zuschaltzeitdauer der Fig. 3 eingehüllt werden.

Figur 4 zeigt den windgeschwindigkeitsabhängigen Inkrementwert, der mittels Stützstellen in dem Windenergieanlagenregler 129 vorgegeben ist. Der Windenergieanlagenregler ist mit einem Time-Out-Zähler versehen, welcher eingerichtet ist, bei einem fehlgeschlagenen Zuschaltversuch durch den vorgegebenen Inkrementwert erhöht wird. Der in Figur 4 dargestellte Verlauf zeigt zunächst einen geringen konstanten Inkrementwert im Bereich der Zuschaltwindgeschwindigkeit, in der in zwei linear ansteigenden Abschnitten auf einen zweiten Plateauwert geführt wird, der bis zur Abschaltwindgeschwindigkeit der Windenergieanlage konstant ist oder leicht bis dort ansteigt. Bei jedem fehlgeschlagenen Zuschaltversuch, wird der Time-Out-Zähler um den entsprechenden Inkrementwert erhöht.

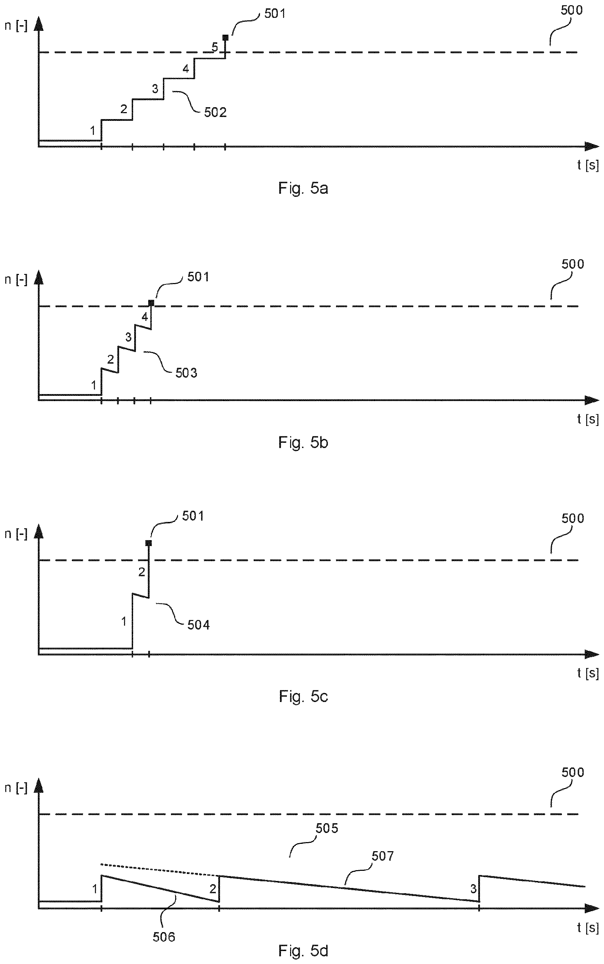

Figur 5a zeigt beispielhaft den zeitlichen Verlauf des Zählerwerts n des Time-Out-Zählers ohne Dekrementierung 502, der beim fünften Fehlversuch 501 einen für die Alarmauslösung vorgegebenen Schwellwert 500 überschreitet. Übersteigt der Zählerwert den Schwellwert 500, wird durch den Windenergieanlagenregler 129 ein Alarm ausgelöst, eine Meldung an die Fernüberwachung 240 gesendet und die Windenergieanlage gestoppt. Wird der Alarm von der Fernüberwachung zurückgesetzt, wird der Zähler nur um einen Additionswert eines fehlgeschlagenen Zuschaltversuchs dekrementiert. Somit unterschreitet der Zählerstand den Grenzwert und die Windenergieanlage startet einen neuen Zuschaltversuch. Schlägt dieser wieder fehl, so wird mit Inkrementieren des Zählers erneut der Grenzwert erreicht und die Windenergieanlage gestoppt. Es wird somit abgesichert, dass bei Zurücksetzen des Alarms durch die Fernüberwachung aber ansonsten unveränderten Bedingungen der Windenergieanlage nicht erneut mehrere Zuschaltversuche nacheinander gestartet werden.

Ist ein Zuschaltvorgang erfolgreich und wechselt die Windenergieanlage in den Produktionsbetrieb, kann davon ausgegangen werden, dass sich die negativen Bedingungen wieder aufgehoben haben (z. B. Vereisung der Blätter nicht mehr vorhanden). Der Zähler kann dann beispielsweise genullt und die Diagnose damit wieder auf ihre Ausgangsbedingung zurückgesetzt werden.

Der Wert des Inkrements, mit welchem der Zählerwert bei jedem fehlgeschlagenen Zuschaltversuch erhöht wird, ist wie in Figur 4 dargestellt, abhängig von der Windgeschwindigkeit. Schlägt ein Zuschaltversuch bei hoher Windgeschwindigkeit fehl, so weist dies eindeutig auf ein Fehlverhalten der Windenergieanlage hin. Der Inkrementwert hat daher einen großen Wert.

Jedoch kann nicht nur ein Fehlverhalten an der Windenergieanlage zum Fehlschlag des Zuschaltens führen, sondern auch ein während des Zuschaltens abflauender Wind. Ein Fehlversuch ist daher unter niedrigen Windbedingungen durchaus plausibel und soll nicht sofort zum Anlagenstopp führen. Bei niedrigen Windgeschwindigkeiten wird der Zähler nur um einen kleineren Wert bei einem Fehlversuch inkrementiert.

Das Ausführungsbeispiel gemäß der Fig. 5a sieht keine zeitliche Dekrementierung des Zählerwerts vor und stellt damit eine einfache Umsetzung dar.

Figur 5b zeigt den zeitlichen Verlauf des Zählerwerts des Time-Out-Zählers mit Dekrementierung 503 bei schwachen Windverhältnissen. Hier wird der Schwellwert 500 bereits beim vierten Fehlversuch überschritten (501). Deutlich zu erkennen in Figur 5b ist, dass zwischen zwei Fehlversuchen der Zählerwert linear abnimmt. Hier ist eine Dekrementrate definiert, die ein zeitliches Abnehmen des Zählerwerts zwischen zwei Fehlversuchen sicherstellt.

Figur 5c zeigt den zeitlichen Verlauf des Zählerwerts des Time-Out-Zählers mit Dekrementierung 504 bei Starkwindverhältnissen. Hier ist der Inkrementwert so groß vorgegeben, dass schon beim zweiten Fehlversuch der Schwellwert 500 überschritten wird und ein Warnsignal ausgelöst und die Anlage gestoppt wird (501).

Figur 5d zeigt das Verhalten des Zählerwerts des Time-Out-Zählers mit Dekrementierung 505 bei geringem bzw. abflauendem Wind, wenn die Zuschaltversuche einen größeren zeitlichen Abstand besitzen. Durch eine windgeschwindigkeitsabhängig vorgegebene Dekrementierungsrate wird der Zählerwert über einen 1. Zeitintervall mit einer höheren Windgeschwindigkeit 506 stärker abgesenkt, als in einem 2. Zeitintervall 507, in welchem die Windgeschwindigkeit gegenüber dem 1. Zeitintervall nachgelassen hat.

Figur 6 zeigt beispielhaft eine statistische Verteilung für die gemessene Zeitdauer für eine erfolgreiche Zuschaltung über der Windgeschwindigkeit für eine Vielzahl von Windenergieanlagen der gleichen Bauform eines Windparks 600. Die Verteilung wurde in diesem Ausführungsbeispiel nur für einen Windpark mit einer vergleichbar geringen Zahl von nur 8 Windenergieanlagen ermittelt. Erkennbar ist allerdings bereits für diese kleine Stichprobe, dass die Windenergieanlagen bei geringen Windgeschwindigkeiten oberhalb der Startwindgeschwindigkeit 301 eine breite Streuung der Zeitdauer aufweisen und diese die maximale Zuschaltdauer 601 nach dem Stand der Technik übersteigen können. Weiterhin ist erkennbar, dass die Streuung mit steigenden Windgeschwindigkeiten stark abnimmt und die gemessene Zeitdauer deutlich unterhalb der maximalen Zuschaltdauer 601 liegt. Verwendet man also einen Verlauf gemäß dem Ausführungsbeispiel nach Fig. 3, hüllt die windgeschwindigkeitsabhängige zulässige Zuschaltdauer die Verteilung aus Fig. 6 deutlich besser ein, als die maximale Zuschaltdauer 601 nach dem Stand der Technik. Durch die empirische Wahl entsprechender Stützstellen für die Parametrierung der windgeschwindigkeitsabhängigen zulässigen Zuschaltdauer kann also das Startverhalten insbesondere für höhere Windgeschwindigkeiten verbessert werden. Die Lager der Windenergieanlagen, die nach dem Ausführungsbeispiel gemäß Fig. 3 betrieben werden, werden also mit Vorteil insbesondere bei hohen Windgeschwindigkeiten vor einer Beschädigung geschützt. Die empirische Wahl ermöglicht es auch, die zulässige Zuschaltdauer so zu wählen, dass diese im Bereich geringer Windgeschwindigkeiten die maximale Zuschaltdauer 601 gemäß dem Stand der Technik übersteigt.

### Bezugszeichenliste

- 100: Windenergieanlage
- 110: Turm
- 120: Gondel
- 130: Rotor
- 140: Rotornabe
- 150: Rotorblatt
- 160: Sensorarray / Anemometer
- 200: Windpark
- 201, 202, 203: Windenergieanlage
- 210: zentraler Windparkregler
- 211: externe Regelungseinrichtung (Netzbetreiber)
- 220: Übergabestation
- 221: Sensoreinheit
- 230: elektrisches Übertragungsnetz
- 240: Fernüberwachung
- 121: Antriebstrang
- 122: Getriebe
- 123: Generator
- 124: Umrichter
- 125: rotorseitiger Umrichter
- 126: netzseitiger Umrichter
- 127: Umrichterregler
- 128: Mittelspannungstransformator
- 129: Windenergieanlagenregler
- 151: Rotorblattwinkelstellvorrichtung
- 161: Drehzahlsensor
- 300: windgeschwindigkeitsabhängige zulässige Zuschaltzeitdauer
- 301: Startwindgeschwindigkeit
- 302: Abschaltwindgeschwindigkeit
- 400: windgeschwindigkeitsabhängiger Zählerinkrementwert
- 500: Schwellwert
- 501: Schwellwertüberschreitung
- 502: zeitlicher Verlauf des Zählerwerts ohne Dekrementierung
- 503: zeitlicher Verlauf des Zählerwerts mit Dekrementierung bei geringen Windgeschwindigkeiten
- 504: zeitlicher Verlauf des Zählerwerts mit Dekrementierung bei hohen Windgeschwindigkeiten
- 505: zeitlicher Verlauf des Zählerwerts mit Dekrementierung bei abflauenden Windgeschwindigkeiten
- 506: zeitlicher Verlauf des Zählerwerts in einem ersten Zeitintervall mit einer Windgeschwindigkeit von ca. 7 m/s
- 507: zeitlicher Verlauf des Zählerwerts in einem zweiten Zeitintervall mit einer Windgeschwindigkeit von ca. 5 m/s
- 600: statistische Verteilung der Zeitdauer für eine erfolgreiche Zuschaltung
- 601: maximal zulässige Zuschaltdauer gemäß Stand der Technik

## Patentansprüche

1. Verfahren zum Steuern eines Zuschaltvorgangs einer Windenergieanlage (100), bei dem ansprechend auf ein Zuschaltsignal eine Drehzahl eines Generators erhöht wird, wobei eine zulässige Zuschaltzeitdauer vorgegeben ist, innerhalb der nach Auftreten des Zuschaltsignals eine Netzkopplung der Windenergieanlage (100) erfolgt sein muss, wobei die zulässige Zuschaltzeitdauer abhängig von der Windgeschwindigkeit vorgegeben ist und der Zuschaltvorgang abgebrochen wird, wenn innerhalb der zulässigen Zuschaltzeitdauer keine Netzkopplung der Windenergieanlage (100) erfolgt ist, **dadurch gekennzeichnet, dass** ein Time-Out-Zähler vorgesehen ist, der eingerichtet ist, seinen Zählerwert um einen Inkrementwert zu erhöhen, wenn ein Zuschaltvorgang abgebrochen wurde, wobei der Inkrementwert von der Windgeschwindigkeit abhängt.

2. Verfahren nach Anspruch 1, **dadurch gekennzeichnet, dass** die zulässige Zuschaltzeitdauer bei Windgeschwindigkeiten in der Nähe der Startwindgeschwindigkeit größer vorgegeben ist, als bei Windgeschwindigkeiten in der Nähe der Abschaltwindgeschwindigkeit.

3. Verfahren nach einem der Ansprüche 1 oder 2, **dadurch gekennzeichnet, dass** die zulässige Zuschaltzeitdauer für eine Bauform einer Windenergieanlage (100) basierend auf einer ermittelten statistischen Verteilung des Startverhaltens einer Vielzahl der Windenergieanlagen (100) der gleichen Bauform vorgegeben ist.

4. Verfahren nach Anspruch 3, **dadurch gekennzeichnet, dass** die zulässige Zeitdauer als eine Einhüllende der statistischen Verteilung vorgegeben ist.

5. Verfahren nach einem der vorhergehenden Ansprüche, **dadurch gekennzeichnet, dass** die zulässige Zeitdauer für die Betriebsführung der Windenergieanlage (100) mittels Stützstellen vorgegeben ist.

6. Verfahren nach Anspruch 1, **dadurch gekennzeichnet, dass** der Inkrementwert bei Windgeschwindigkeiten in der Nähe der Startwindgeschwindigkeit kleiner vorgegeben ist, als bei Windgeschwindigkeiten in der Nähe der Abschaltwindgeschwindigkeit.

7. Verfahren nach einem der vorhergehenden Ansprüche, **dadurch gekennzeichnet, dass** ein Schwellwert (500) vorgesehen ist und die Windenergieanlage (100) bei einer Überschreitung des Schwellwertes (500) gestoppt wird.

8. Verfahren nach Anspruch 7, **dadurch gekennzeichnet, dass** bei Überschreitung des Schwellwertes (500) ein Fehlersignal an eine Fernüberwachung (240) übermittelt wird und die Windenergieanlage (100) bis zu einer Freigabe durch einen Operator der Fernüberwachung (240) keinen weiteren Zuschaltvorgang unternimmt.

9. Verfahren nach einem der Ansprüche 7 oder 8, **dadurch gekennzeichnet, dass** der Schwellwert (500) für alle Windgeschwindigkeiten den gleichen Wert besitzt.

10. Verfahren nach einem der Ansprüche 1 bis 9, **dadurch gekennzeichnet, dass** für den Time-Out-Zähler eine Dekrementierungsrate vorgesehen ist, die eine Dekrementierung des Zählerwerts mit der Zeit angibt.

11. Verfahren nach Anspruch 10, **dadurch gekennzeichnet, dass** der Zählerwert linear mit der Zeit dekrementiert wird.

12. Windenergieanlage (100) aufweisend einen Windenergieanlagenregler (129), der eingerichtet ist, ein Verfahren nach einem der vorangegangenen Ansprüche auszuführen.

## Claims

1. A method for controlling a connecting process of a wind turbine (100), in which, in response to a connection signal, a rotational speed of a generator is increased, wherein a permissible connection period is specified, within which, following the occurrence of the connection signal, the wind turbine (100) must have been coupled to the grid, wherein the permissible connection period is specified depending on the wind speed and the connecting process is interrupted if, within the permissible connection period, the wind turbine (100) is not coupled to the grid, **characterized in that** a time-out counter is provided, which is adapted to increase its counter value by an incremental value if a connecting process has been interrupted, wherein the incremental value depends on the wind speed.

2. The method according to Claim 1, **characterized in that** the permissible connection period in the case of wind speeds near the starting wind speed is specified to be greater than in the case of wind speeds near the cut-out wind speed.

3. The method according to one of Claims 1 or 2, **characterized in that** the permissible connection period is specified for a design of a wind turbine (100) based on a determined statistical distribution of the starting behavior of a plurality of wind turbines (100) of the same design.

4. The method according to Claim 3, **characterized in that** the permissible period is specified as an envelope of the statistical distribution.

5. The method according to one of the preceding claims, **characterized in that** the permissible period is specified for the control of the wind turbine (100) by means of sampling points.

6. The method according to Claim 1, **characterized in that** the incremental value in the case of wind speeds near the starting wind speed is specified to be smaller than in the case of wind speeds near the cut-out wind speed.

7. The method according to one of the preceding claims, **characterized in that** a threshold (500) is provided and the wind turbine (100) is stopped in the event of the threshold (500) being exceeded.

8. The method according to Claim 7, **characterized in that** in the event of the threshold (500) being exceeded, an error signal is transmitted to the remote monitoring (240) and the wind turbine (100) does not carry out any further connecting process until clearance is provided by an operator of the remote monitoring (240).

9. The method according to one of Claims 7 or 8, **characterized in that** the threshold (500) has the same value for all wind speeds.

10. The method according to one of Claims 1 to 9, **characterized in that** a decrementing rate which indicates a decrementing of the counter value over time is provided for the time-out counter.

11. The method according to Claim 10, **characterized in that** the counter value is linearly decremented over time.

12. A wind turbine (100) comprising a wind turbine controller (129) which is configured to execute a method according to one of the preceding claims.

## Revendications

1. Procédé de commande d'un processus de mise en circuit d'une éolienne (100), dans lequel une vitesse de rotation d'un générateur est augmentée en réponse à un signal de mise en circuit, ledit procédé définissant une durée de mise en circuit autorisée, pendant laquelle un couplage réseau de l'éolienne (100) doit être effectué après la survenance du signal de mise en circuit, dans lequel la durée de mise en circuit autorisée est définie en fonction de la vitesse du vent et le processus de mise en circuit est interrompu lorsqu'aucun couplage réseau de l'éolienne (100) n'est effectué pendant la durée de mise en circuit autorisée, **caractérisé en ce qu'**il est prévu un compteur d'expiration conçu pour augmenter sa valeur de compteur selon une valeur d'incrément lorsqu'un processus de mise en circuit a été interrompu, la valeur d'incrément dépendant de la vitesse du vent.

2. Procédé selon la revendication 1, **caractérisé en ce que** la durée de mise en circuit autorisée est définie de manière à être plus grande pour des vitesses de vent proches de la vitesse du vent au démarrage que pour des vitesses de vent proches de la vitesse du vent à l'arrêt.

3. Procédé selon l'une des revendications 1 ou 2, **caractérisé en ce que** la durée de mise en circuit autorisée pour une conception d'une éolienne (100) est définie sur la base d'une distribution statistique déterminée de la performance de démarrage d'un multitude des éoliennes (100) de la même conception.

4. Procédé selon la revendication 3, **caractérisé en ce que** la durée autorisée est définie comme une enveloppe de la distribution statistique.

5. Procédé selon l'une des revendications précédentes, **caractérisé en ce que** la durée autorisée pour l'exploitation de l'éolienne (100) est définie au moyen de points de référence.

6. Procédé selon la revendication 1, **caractérisé en ce que** la valeur d'incrément pour des vitesses de vent proches de la vitesse du vent au démarrage est définie de manière à être plus petite que pour des vitesses de vent proches de la vitesse du vent à l'arrêt.

7. Procédé selon l'une des revendications précédentes, **caractérisé en ce qu'**il est prévu une valeur seuil (500) et l'éolienne (100) est stoppée lors d'un dépassement de la valeur seuil (500).

8. Procédé selon la revendication 7, **caractérisé en ce que** lors d'un dépassement de la valeur seuil (500), un signal d'erreur est transmis à une unité de surveillance à distance (240) et l'éolienne (100) n'effectue aucun processus de mise en circuit supplémentaire jusqu'à un déblocage par un opérateur de l'unité de surveillance à distance (240).

9. Procédé selon l'une des revendications 7 ou 8, **caractérisé en ce que** la valeur seuil (500) présente la même valeur pour toutes les vitesses de vent.

10. Procédé selon l'une des revendications 1 à 9, **caractérisé en ce que** pour le compteur d'expiration, il est prévu un taux de décrémentation indiquant une décrémentation de la valeur de compteur.

11. Procédé selon la revendication 10, **caractérisé en ce que** la valeur de compteur est décrémentée linéairement avec le temps.

12. Éolienne (100) présentant un régulateur d'éolienne (129) configuré pour mettre en oeuvre un procédé selon l'une des revendications précédentes.
